# EUROPEAN PATENT APPLICATION

(11) **EP 3 945 488 A1**
(43) Date of publication of application: **02.02.2022**
(21) Application number: 21188241.0
(22) Date of filing: 28.07.2021
(51) Int. Cl.: G06Q 30/06

(54) **REMOTE SHOPPING SYSTEM, REMOTE SHOPPING METHOD, AND PROGRAM**

(30) Priority: 31.07.2020 JP 2020131138
(71) Applicant: TOYOTA JIDOSHA KABUSHIKI KAISHA, Toyota-shi, Aichi-ken 471-8571 (JP)
(72) Inventor: KAKU, Wataru, Aichi-ken, 471-8571 (JP); LEE, Haeyeon, Aichi-ken, 471-8571 (JP); HORI, Tatsuro, Aichi-ken, 471-8571 (JP); WATANABE, Narimasa, Aichi-ken, 471-8571 (JP)
(74) Representative: D Young & Co LLP

(57) **Abstract**

To provide a remote shopping system, a remote shopping method, and a program that are high convenient. A remote shopping system (1000) according to an embodiment includes: a camera (211) for acquiring a captured image of a product; a transmission unit (210) configured to transmit an output signal for display to a display unit for displaying the captured image to a user; an input unit (130) configured to accept an instruction for changing at least one of a relative position and a relative angle between the product and the camera based on a detection result of a sensor configured to detect a motion of the user; and a moveable mechanism configured to change at least one of the relative position and the relative angle between the product and the camera based on the instruction accepted by the input unit (130).

## Description

### BACKGROUND

The present disclosure relates to a remote shopping system, a remote shopping method, and a program.

Patent Literature 1 (Japanese Unexamined Patent Application Publication No. 2003-99629) discloses a remote product sales system in which a user can purchase a product while viewing a real-time image of the product.

### SUMMARY

It is desired to improve the convenience of remote shopping using such a system.

The present disclosure has been made in view of the background mentioned above. An object of the present disclosure is to provide a remote shopping system, a remote shopping method, and a program that are highly convenient.

A remote shopping system according to an exemplary aspect includes:
an image acquisition unit configured to acquire a captured image of a product;
a transmission unit configured to transmit an output signal for display to a display unit for displaying the captured image to a user;
an input unit configured to accept an instruction for changing at least one of a relative position and a relative angle between the product and a camera based on a detection result of a sensor configured to detect a motion of the user; and
a moveable mechanism configured to change at least one of the relative position and the relative angle between the product and the camera based on the instruction accepted by the input unit.

In the aforementioned remote shopping system, the moveable mechanism may be included in a robot having an end effector for holding the product.

In the aforementioned remote shopping system, the display unit may be configured to display the product information attached to the product.

In the aforementioned remote shopping system, a related product may be recommended to the user, the related product being a product related to a product purchased by the user or a product the user may become interested in purchasing.

A remote shopping method according to another exemplary aspect includes the steps of:
acquiring a captured image of a product;
transmitting an output signal for display to a display unit for displaying the captured image to a user;
accepting an instruction for changing at least one of a relative position and a relative angle between the product and a camera based on a detection result of a sensor configured to detect a motion of the user; and
changing at least one of the relative position and the relative angle between the product and the camera based on the accepted instruction.

In the aforementioned remote shopping method, at least one of the relative position and the relative angle of the product with respect to the camera may be changed using a robot having an end effector for holding the product.

In the aforementioned remote shopping method, the display unit may be configured to display the product information attached to the product.

In the aforementioned remote shopping method, a related product may be recommended to the user, the related product being a product related to a product purchased by the user or a product the user may become interested in purchasing.

A non-transitory computer readable medium storing a program according to a further another exemplary aspect for causing a computer to execute a remote shopping method, the remote shopping method including the steps of:
acquiring a captured image of a product;
transmitting an output signal for display to a display unit for displaying the captured image to a user;
accepting an instruction for changing at least one of a relative position and a relative angle between the product and a camera based on a detection result of a sensor configured to detect a motion of the user; and
changing at least one of the relative position and the relative angle between the product and the camera based on the accepted instruction.

In the aforementioned program, at least one of the relative position and the relative angle of the product with respect to the camera may be changed using a robot having an end effector for holding the product.

In the aforementioned program, the display unit may be configured to display the product information attached to the product.

In the aforementioned program, a related product is recommended to the user, the related product being a product related to the product purchased by the user or a product the user may become interested in purchasing.

The present disclosure has an object to provide a remote shopping system, a remote shopping method, and a program that are highly convenient.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram showing a system according to an embodiment;
Fig. 2 is a diagram showing an example of a video of the products;
Fig. 3 is a diagram showing an example of a display image;
Fig. 4 is a diagram showing an example of a display image;
Fig. 5 is a diagram showing an example of a display image according to a second embodiment;
Fig. 6 is flowchart showing a remote shopping method;
Fig. 7 is a diagram showing an example of a display image according to a third embodiment; and
Fig. 8 is a block diagram showing a hardware configuration of the system.

### DESCRIPTION OF EMBODIMENTS

Hereinafter, the present disclosure will be described through embodiments of the present disclosure. However, the embodiments are not intended to limit the scope of the present disclosure according to the claims. Further, not all of the components/structures described in the embodiments are necessarily indispensable as means for solving the problem. Note that the following description and the attached drawings are appropriately shortened and simplified where appropriate to clarify the explanation. In the figures, the identical reference symbols denote identical structural elements and the redundant explanation thereof is omitted.

### First Embodiment

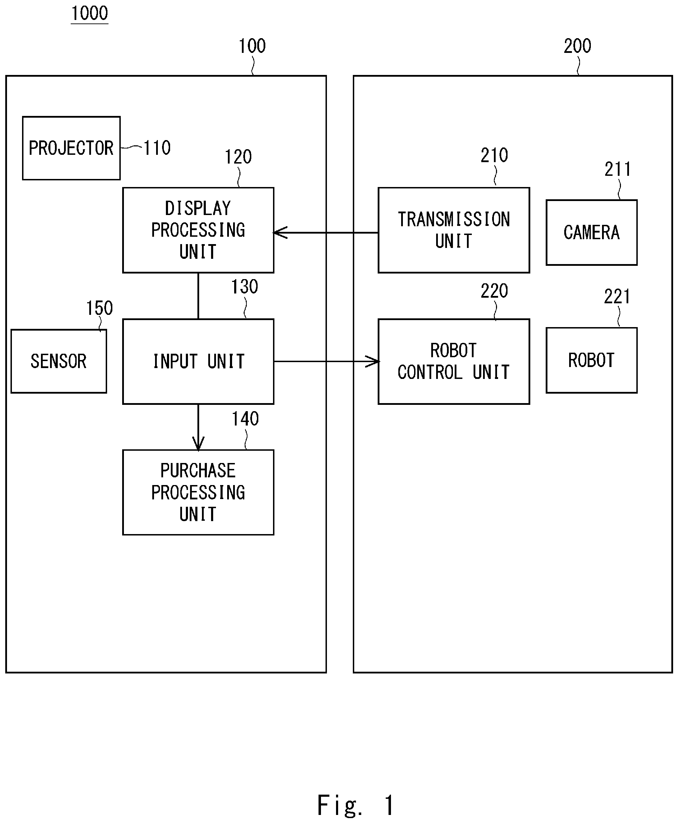

Fig. 1 is a block diagram showing a system 1000 according to the present embodiment. The system 1000 is a remote shopping system for a user who is at a remote site to purchase a product. It is possible to establish communication between a shopping room 100 in which the user is present and a store 200 in which the products are displayed. The store 200 is at a site remote from the shopping room 100, and the store 200 and the shopping room 100 are connected with each other via a network such as the internet.

The shopping room 100 is, for instance, at the user's home. Alternatively, the shopping room 100 is, for instance, a room dedicated to virtual shopping. The store 200 may be a brick and mortar store which the user actually visits. Alternatively, the store 200 may be a warehouse where products are displayed, and the user does not need to come to the warehouse.

The shopping room 100 is equipped with a projector 110, a display processing unit 120, an input unit 130, a purchase processing unit 140, and a sensor 150. The store 200 is equipped with a transmission unit 210, a camera 211, a robot control unit 220, and a robot 221.

A plurality of products are displayed at the store 200. The products are, for instance, perishable foods such as fruits, vegetables, seafood, and meat. The products may also be clothing, daily necessities, sundry articles, and the like. Various products like those displayed at a department store or a large supermarket may be displayed at the store 200. There are different selling sections for each kind of product at the store 200.

The camera 211 takes a picture of the product displayed at the store 200. The camera functions as an image acquisition unit that acquires a captured image of a product. The camera 211 is attached to the robot 221. The robot 221 is moveable within the store 200. Further, the robot 221 includes an end effector for holding a product. The end effector may be a hand mechanism for grasping or pinching a product. Alternatively, the end effector may be an adsorption mechanism for holding a product by adsorption. The holding mechanism for holding a product may be a hand for adsorption-holding or a hand for grasp-holding. Further, the robot 221 includes an arm mechanism for changing the position or the orientation of the hand.

The robot control unit 220 controls the robot 221. The robot control unit 220 controls a driving motor and the like of the robot 221. With this configuration, the robot 221 can change the position and the angle of the camera 211. That is, the robot 221 and the robot control unit 220 configure a moveable mechanism for changing the relative image capturing position and the relative image capturing direction of the camera 211 with respect to the product. The robot control unit 220 causes the robot 221 to move within the store 200. By using the robot 221 having the end effector for holding the product as a moveable mechanism, it is possible to check the bottom side of the product.

The movable mechanism for changing the relative image capturing position and the relative image capturing direction of the camera 211 with respect to the product is not limited to the robot 221 and the robot control unit 220. The movable mechanism may be a robot that moves the camera 211. Alternatively, the movable mechanism may be a moveable shelf, and the position, the height, and the orientation of the shelf on which the products are displayed are changed by this mechanism. Further, the image capturing angle may be changed by placing the selected product on a turntable or the like. Further, the movable mechanism may be configured by combining the robot 221 with the moveable shelf. The moveable mechanism may be of any configuration as long as at least one of the relative position and the relative angle between the product and the camera 211 can be changed.

Further, the store 200 may be provided with a plurality of cameras 211. For instance, one of the cameras 211 may be installed in each selling section of the store. In such a case, the camera 211 can be switched in accordance with the selling section selected by the user.

The transmission unit 210 transmits an image of the product captured by the camera 211 to a terminal in the shopping room 100. The transmission unit 210 transmits an output signal (image data) for display to the display unit that displays an image to the user. Furthermore, the product information attached to the product may be transmitted. For instance, the transmission unit 210 may transmit the price, the producing district, and the name of the product.

The display unit 120 performs display processing on the product image transmitted from the transmission unit 210. Further, the projector 110 displays the product image which has been subjected to the display processing. With this configuration, the user can confirm the product displayed at a remote site on a real-time basis.

The sensor 150 is installed for detecting the motion and the voice of a user. The sensor 150 includes a camera for capturing an image of a user. Alternatively, the sensor 150 may include a motion sensor such as Kinect. The sensor 150 detects the motion of a user. Examples of the sensor 150 include a camera, a skeletal frame detection sensor, a motion sensor such as Kinect, a touch panel, a mouse, a keyboard, and a visual line detection sensor. The sensor 150 may include a microphone for detecting a voice of a user. Further, the motion of a user may be detected by combining two or more sensors.

The input unit 130 accepts input from a user based on the detection result of the sensor 150. For instance, when the sensor 150 detects the skeletal frame of a user, the user can perform an input operation by gesturing. The input unit 130 recognizes the gesture from the user's motion. The input unit 130 accepts the input instruction corresponding to the gesture. Each input instruction and the corresponding gesture are associated with each other in advance in the input unit 130. The input instruction accepted by the input unit 130 may be a voice input, a touch panel input, or the like.

The input unit 130 accepts an instruction for changing at least one of the relative position and the relative angle between the product and the camera 211. For instance, the user selects the product he/she wants to purchase. The user inputs instruction to the robot to grasp the selected product when he/she wants to look at the selected product more closely. The robot 221 grasps the selected product from among the plurality of products on the store shelf. Further, when the user inputs the instruction to enable her/him to look at the selected product from various angles, the robot control unit 220 controls the robot 221 so as to change the orientation of the selected product grasped by the robot 221. Thus, the robot control unit 220 changes at least one of the relative position and the relative angle between the product and the camera 211 based on the instruction accepted by the input unit 130. The input unit 130 accepts the instruction for changing at least one of the relative position and the relative angle between the product and the camera 211 based on the detection result of the sensor 150 that detects the motion of a user U.

The purchase processing unit 140 accepts the purchase of the product by the user. The robot 221 puts the purchased product in a cart or the like. Further, the robot 221 returns the unpurchased product to the store shelf. The purchase processing unit 140 performs credit card settlement or the like in accordance with the purchase price of the product. The purchased product is delivered from the store 200 to the user. The address and the settlement information of the user are registered in advance in a user's mobile terminal or the like.

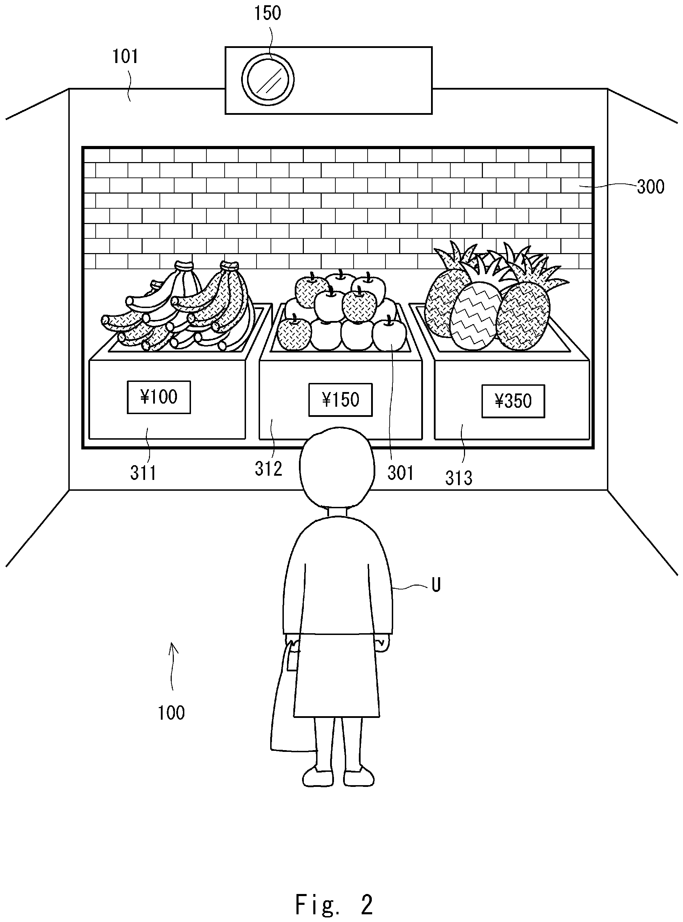

Figs. 2 to 4 are diagrams each showing an example of the display image including the product image. Figs. 2 to 4 are diagrams each showing an example of a fruit section at which the user U purchases a product. The shopping room 100 is, for instance, the home of the user U or the like. The projector 110 projects the display image 300 on a wall 101 of the room of the user's home. For instance, the size of the room of the user's house is around 3 m × 3 m, and the size of the projector 110 on which the display image 300 is displayed is around 120 inches. Therefore, the shopping room 100 is a virtual space reproducing the store 200. The user can shop using the shopping room 100 as a virtual supermarket or a virtual department store. Thus, the user U can enjoy shopping. Besides the wall 101, the display image 300 may be projected on the ceiling or the floor of the room.

As described above, the display image 300 is an image captured by the camera 211 installed at the store 200. The display image 300 includes an image 301 of the product (hereinbelow referred to as the product image 301) displayed at the store 200. The projector 110 displays the display image 300 including the product image 301 to the user U on a real-time basis. The product image 301 and the display image 300 may each be a video image or may be a still image that is updated sequentially.

The sensor 150 is disposed on the upper side of the wall 101. The sensor 150 is a camera that captures an image of the user standing in front of the wall 101. The sensor 150 is disposed on the wall 101 at a position higher than the display image 300. The place at which the sensor 150 is disposed it not limited to the wall 101. That is, the sensor 150 may be disposed at any position as long as it can capture an image of the user U in the shopping room 100. Further, the sensor 150 may be provided with a mechanism for changing its orientation and position so as to track the user U.

The display image 300 includes three store shelves 311 to 313. At the store 200, difference kinds of fruit are displayed on the store shelves 311 to 313. The store shelf 311 is a product shelf on which a plurality of bananas are displayed. A plurality of apples are displayed on the store shelf 312 and a plurality of pineapples are displayed on the store shelf 313. Further, the price of each product is shown on the store shelves 311 to 313. The products displayed on the store shelves are not particularly limited. Further, the number of the product shelves and how the products are displayed are not particularly limited.

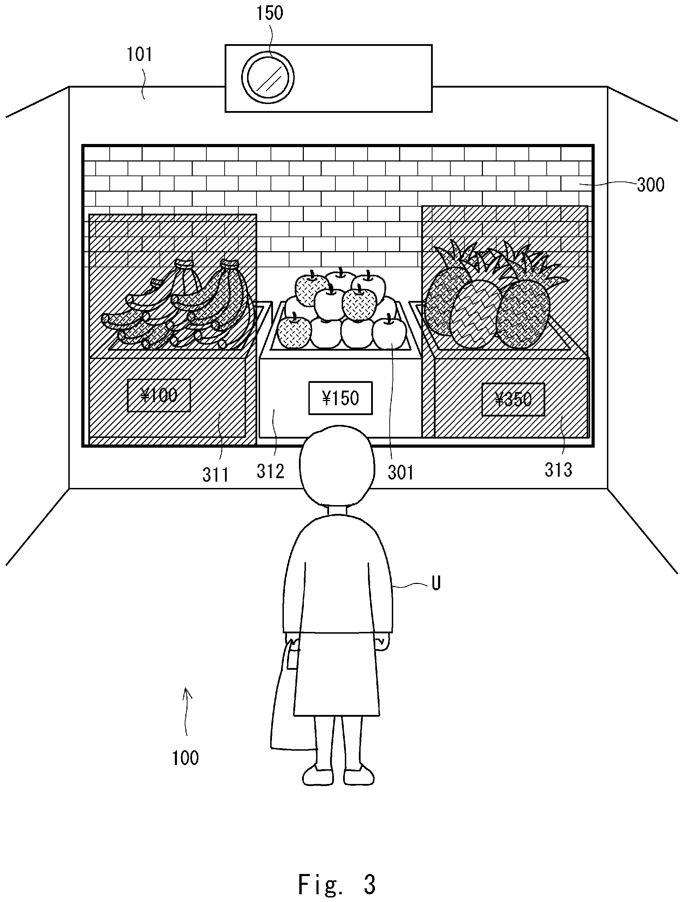

The user U performs the input operation by gesturing while watching the display image 300. The user U performs gestures for selecting the store shelf 312 in the middle. The input unit 130 recognizes the user's gesture based on the image of the user U captured by the sensor 150. For instance, the user U moves in parallel to the wall 101 and stands in front of the store shelf 312. Accordingly, the input unit 130 recognizes that the store shelf 3 12 is selected. The store shelf 312 is then displayed in a high-lighted manner as shown in Fig. 3. In Fig. 3, since the store shelves 311 and 313 that are not selected are shown in a greyed out manner, the store shelf 312 is displayed relatively brighter than the store shelves 311 and 313. The display processing unit 120 performs the display processing so as to display the selected product and the store shelf therefor relatively brighter than the unselected product and the store shelf.

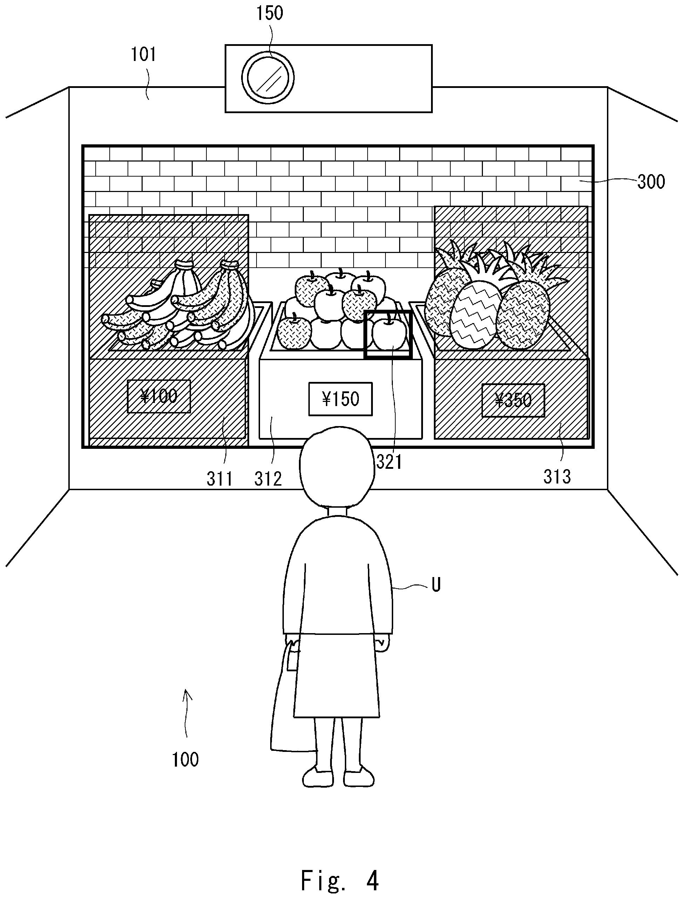

Further, the user U selects the product he/she wants to purchase from among the products displayed on the store shelf 312. Here, the user U points at the product image 301 of the product he/she wants to purchase whereby the product is selected. In Fig. 4, the product selected by the user U is shown as a selected product 321. The robot 221 grasps the selected product 321.

Then, when the user U performs a gesture for turning the selected product 321 around or the like, the robot 221 turns the selected product 321 around. Thus, the user U can confirm the color of the selected product 321 from various angles. Further, two or more products may be selected and placed close to each other to be compared. The user U may input the instruction as regards the zoom function of the camera 211. By this configuration, an enlarged image of a part of the product can be captured. The user U may be informed of the weight, the softness, and the like of the selected product 321 grasped by the robot 221 as feedback information.

When the user U wants to purchase the selected product 321, he/she performs a purchase operation. When the input unit 130 accepts the purchase instruction, the robot 221 puts the selected product 321 into the shopping cart. The robot 221 functions as a moveable mechanism that changes at least one of the relative position and the relative angle between the product and the camera.

When the user U cancels his/her order for the selected product 321, he/she performs a cancelling operation. When the input unit 130 accepts the cancel instruction, the robot 221 returns the selected product 321 to the store shelf 312. The gestures indicating the purchase operation and the cancelling operation are determined in advance. Alternatively, the user U may input various instructions through voice input.

By this configuration, it is possible for the user U to sufficiently consider whether he/she wants to purchase the selected product 321. The user U can confirm the image of the selected product 321 taken from various positions and angles. Therefore, it is possible to improve the convenience of remote shopping. Specifically, perishable foods may differ in their individual sizes even if they are of the same kind of product. In the present embodiment, the user U is able to intuitively sense the difference between the individual products. Therefore, the convenience of remote shopping can be improved.

The display processing unit 120 may scroll the display image 300 as the user U gestures or moves. Further, a part of the display image 300 may be shown in a highlighted manner or a greyed out manner in accordance with the gesture performed by the user U or the movement of the user U. For instance, the display processing unit 120 may perform display processing so that the product or the shelf selected by the user U may be highlighted.

The user U can purchase the product after confirming the color and the shape of the product. Further, the user U can select two or more products. In this case, the robot 221 places the two or more products in proximity to one another, for instance, side-by-side. As such, it is possible to compare products of the same type. The user U can check the products in more detail.

### Second Embodiment

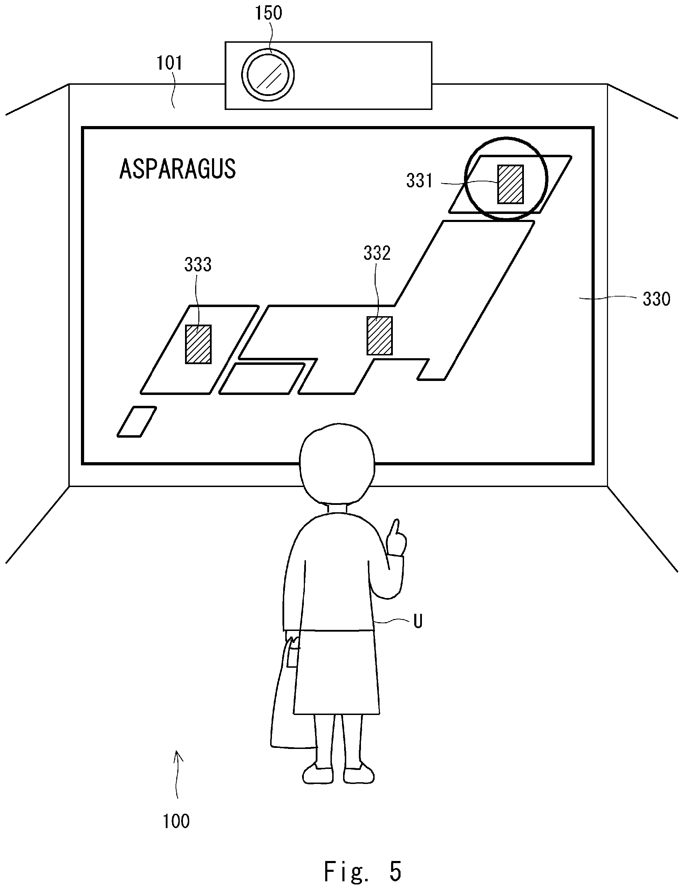

In a second embodiment, product information is attached to each product. Fig. 5 is a diagram showing an example of the display image 330 displaying the product information. The transmission unit 210 transmits the product information to the display processing unit 120. The projector 110 displays the product information to the user U. Note that the basic configuration of the system 1000 is the same as that of the first embodiment and thus detailed explanation thereof is omitted.

Here, information indicating the producing district is included in the product as the product information. For instance, the projector 110 projects, on the wall 101, the display image 330 indicating the producing districts 331 to 333 on a map. In Fig. 5, the user U has input that he/she wants to purchase asparagus and therefor the producing districts 331 to 333 of asparagus sold at the store 200 are shown on a map.

The user U selects the producing district 331 by, for instance, pointing at the producing district 331. Accordingly, the robot 221 moves to the store shelf on which the asparagus of the producing district 331 is displayed. The camera 211 captures a product image of the asparagus of the producing district 331. By this configuration, the projector 110 can display the product image of the product in the producing district 331 to the user U. Note that the processing hereinafter are the same as those performed in the first embodiment and thus explanations thereof are omitted.

By this configuration, the user U can select the product he/she wants to purchase based on the product information and thus the convenience of remote shopping can be enhanced. The product information is information related to the product and is not particularly limited to the producing district of the product. The product information is, for instance, the name of the product, the producing district of the product, the store, the product name, and the video. The user U can select the specific product from among the products of the same type. Then, the projector 110 displays the specific product that has been selected.

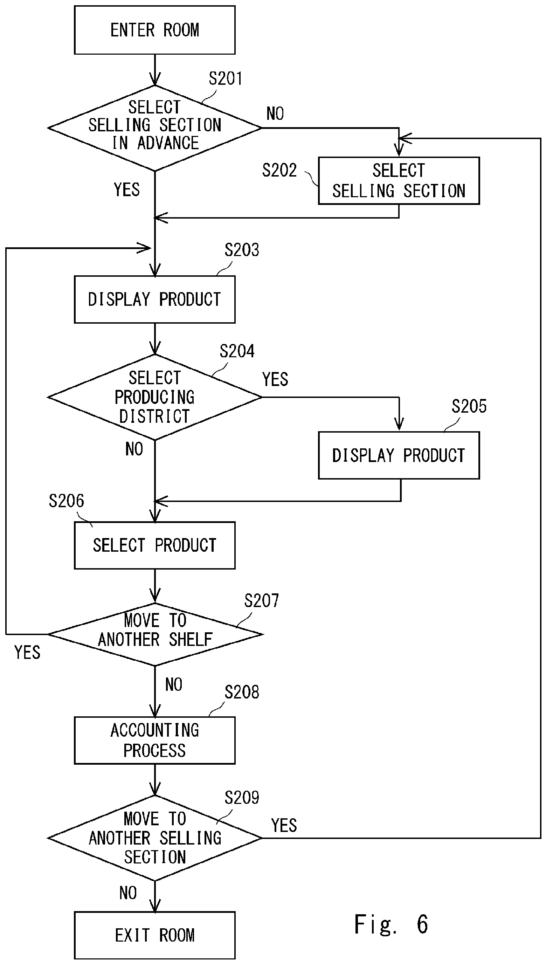

Fig. 6 is a flowchart showing a remote shopping method according to this embodiment. First, the robot control unit 220 determines whether or not the selling section is selected in advance (S201). For instance, the user U can designate the selling section by operating a mobile terminal or the like when reserving the virtual shopping room.

When the selling section is selected in advance (YES in S201), the projector 110 displays the product in the selling section (S203). When the selling section is not selected in advance (NO in S201), the user U selects the selling section (S202). The sensor 150 detects the gesture to select the selling section performed by the user. For instance, the user U can select the fruit section, the vegetable section, the seafood section, or the like.

Then, the projector 110 displays the product in the selling section (S203). Specifically, the robot 221 moves the camera 211 to the selling section the captures an image of the shelves in the selling section which has been selected. Then, the transmission unit 210 transmits the product image to the display processing unit 120. The display processing unit 120 performs display processing on the product image. Accordingly, as shown in Fig. 2, the projector 110 can display the store shelves in the selling section.

Next, it is determined whether or not the user U selected the producing district (S204). When the user U selects the producing district (YES in S204), the projector 110 displays the product of the selected producing district (S205). Then, the user U selects the product (S206). The robot 221 holds the selected product. Accordingly, the user U can confirm the product from various angles. Further, the user U can purchase the selected product.

When the user U has not selected the producing district (NO in S204), the projector 110 continues to display the product. Then, the user U selects the product (S206). The robot 221 holds the selected product. Accordingly, the user U can confirm the product from various angles. Further, the user U can purchase the selected product.

Next, the user U can select whether to move to another shelf (S207). When the user U selects to move to another shelf (YES in S207), the step returns to S203. For instance, the projector 110 displays the product on the adjacent product shelf. Then, the aforementioned processing is repeated.

When the user U selects not to move to another shelf (NO in S207), the purchase processing unit 140 performs accounting process (S208). That is, the purchase processing unit 140 adds up the purchase prices of the products and performs the accounting process. Further, the user U selects whether or not he/she is going to move to the next selling section (S209). When the user U selects to move to another shelf (YES in S209), the step returns to Step S202. The user U performs an operation for selecting another shelf. In such a case, the user U may move using a virtual elevator or the like. It is possible to display the movement of the user U within the virtual shopping mall that has been customized for the user U and his/her family members. Thus, it is possible to enhance the realism. When the user U selects not to move to another shelf (NO in S209), the user exits the room and the processing ends.

### Third Embodiment

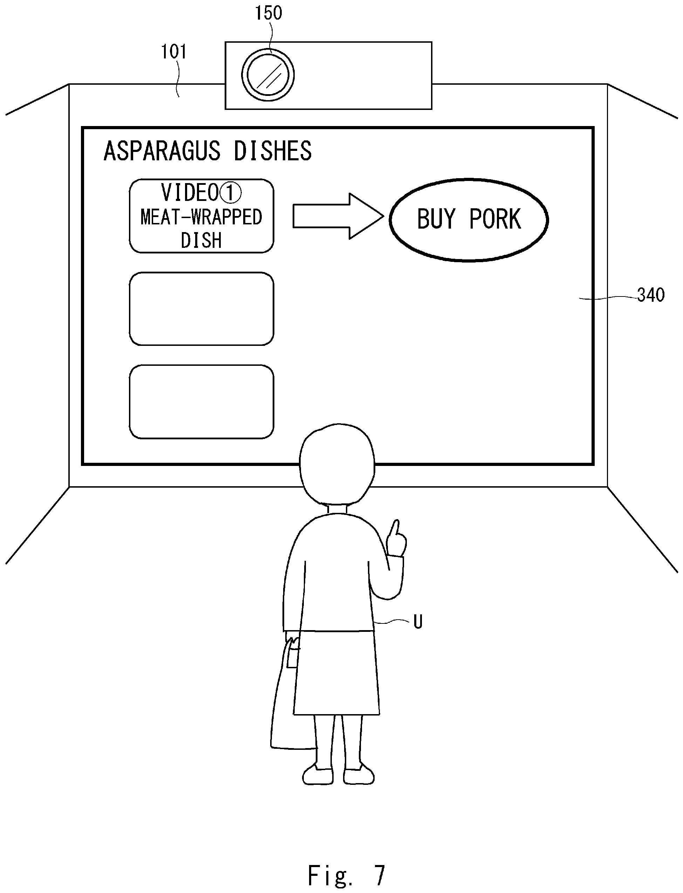

In this embodiment, the system 1000 includes a function of recommending a related product. The related product is a product related to the product purchased by the user U or a product the user U may become interested in purchasing. Fig. 7 is a diagram showing an example of a display image 340 for recommending the related product which is a product related to the product purchased by the user U. In Fig. 7, when the user U purchased asparagus, the related product which is a product related to asparagus is recommended to the user U. Specifically, in Fig. 7, the display image 340 for playing back a recipe video of a recipe using asparagus is displayed on the wall 101.

Then, other ingredients included in the recipe are displayed as the related products. In this case, pork is displayed as the related product. When the user U selects to purchase the related product, the robot 221 moves to the store shelf displaying the related product. The camera 211 captures a product image of the related product. Thus, it is possible to display the product image of the related product to the user U. Then, the user U can purchase the related product. Note that the processing hereinafter are the same as those performed in the first embodiment and thus explanations thereof are omitted.

By this configuration, it is possible to recommend, to the user U, the related product which is a product related to the purchased product. Therefore, it is possible to improve the convenience of remote shopping.

Note that in the aforementioned explanation, the real-time image of the product is transmitted, however, the transmission unit 210 may transmit three-dimensional data acquired in advance. Even in such a case, the user U can confirm the product from various angles.

Note that there may be a plurality of stores 200 located at a plurality of places. That is, the same product or different products may be displayed at the plurality of stores 200. The user U inputs the product he/she wants to purchase and the product information thereof. The camera 211 may capture an image of the applicable product. When the product is sold at the plurality of stores 200, the product information of the product sold at the store 200 closest to the user U is transmitted. By this configuration, it is possible to maintain freshness of the product.

Further, there may be a plurality of shopping rooms 100 located at a plurality of locations. Two or more users may shop simultaneously. In this case, a plurality of user in one of the shopping rooms 100 may shop simultaneously. Alternatively, a plurality of users in difference shopping rooms 100 may shop simultaneously.

The display unit for displaying the display image for making the shopping room 100 into a virtual space may take various forms. For instance, a virtual space may be generated using a monitor disposed on one side of the room. That is, the display image is displayed on a monitor or a screen on the wall. Alternatively, the display image may be displayed in the virtual space by a head-mounted display. The display image may be displayed in the real space via a smart glass or a camera-equipped mobile terminal screen.

The image acquisition unit may be a sensor that acquires an image (e.g., a camera, a point cloud measurement sensor, etc.). Further, the image acquisition unit may be a reception unit (disposed in the server, the display unit, or the like of the system) that acquires the image data which has been subjected to sensing from the sensor via wired or wireless communication.

It is desirable that the user's motion for inputting the instruction is gesturing. A motion to move such as a mere walking motion of the user may be excluded from the user's motion for inputting the instruction. The user's motion may be a motion of a preset part of the body of the user. The preset part of the body may be the head, the limbs, or the upper limbs (arms, hands, fingers, and the like), or a combination of (combined) motions of at least two of these parts.

The moveable mechanism may be configured to be moveable so as to change the position or the inclination of the placement surfaces on which the products are placed. Further, the moveable mechanism may be configured to be moveable so as to change the relative position and the relative angle between the placement surfaces of the plurality of products included in the aforementioned products.

The aforementioned system 1000 may be implemented by a computer program. For instance, the aforementioned processing can be implemented by at least one processor such as the user terminal for the user U and the server device for the store 200. Specifically, the processors of the smartphone belonging to the user U or the personal computer at the store 200 can perform the processing.

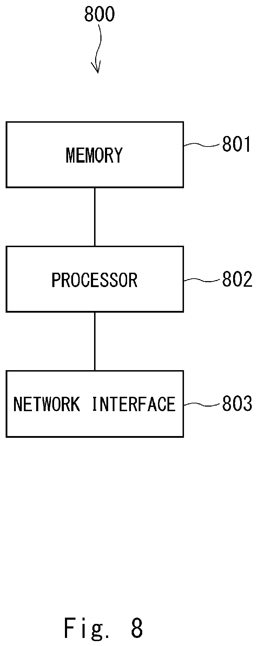

Next, a hardware configuration of the system 1000 according to the embodiment will be described. Fig. 8 is a block diagram showing an example of a hardware configuration of the system. As shown in Fig. 8, a system 800 includes, for instance, at least one memory 801, at least one processor 802, and a network interface 803.

The network interface 803 is used to communicate with other apparatuses via a wired or wireless network. The network interface 803 may include, for instance, a network interface card (NIC). The system 800 acquires the product image and the input instruction via the network interface 803.

The memory 801 is configured by combining a volatile memory with a nonvolatile memory. The memory 801 may include a storage disposed away from the processor 802. In this case, the processor 802 may access the memory 801 via the input/output interface (not shown).

The memory 801 may be used to store a software (a computer program) executed by the processor 802, the software including at least one instruction. The memory 801 may store a program for implementing the aforementioned remote shopping method.

Further, in the aforementioned embodiment, the present disclosure has been described in terms of the hardware configuration thereof but it is not limited thereto. According to the present disclosure, it is possible to implement the control processing of the system by causing the CPU (Central Processing Unit) to execute the program. Further, whole or a part of the processing may be may be implemented by the user terminal in the shopping room 100 or may be implemented by the store terminal disposed at the store 200. The user terminal may be a smartphone, PC (personal computer), a tablet PC, or the like. Further, a part of the processing can be implemented by at least one server device disposed at locations other than the shopping room 100 and the store 200.

Further, the aforementioned program can be stored and provided to a computer using any type of non-transitory computer readable media. Non-transitory computer readable media include any type of tangible storage media. Examples of non-transitory computer readable media include magnetic storage media, optical magnetic storage media, CD-ROM (Read Only Memory), CD-R, CD-R/W, and semiconductor memories. Examples of magnetic storage media include floppy disks, magnetic tapes, hard disk drives, etc. Examples of optical magnetic storage media include optical magnetic disks. Examples of semiconductor memories include mask ROM, PROM (Programmable ROM), EPROM (Erasable PROM), flash ROM, RAM (Random Access Memory), etc. Further, the program may be provided to a computer using any type of transitory computer readable media. Examples of transitory computer readable media include electric signals, optical signals, and electromagnetic waves. Transitory computer readable media can provide the program to a computer via a wired communication line such as electric wires, and optical fibers or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A remote shopping (1000) system comprising:
an image acquisition unit configured to acquire a captured image of a product;
a transmission unit (210) configured to transmit an output signal for display to a display unit (110) for displaying the captured image to a user;
an input unit (130) configured to accept an instruction for changing at least one of a relative position and a relative angle between the product and a camera (211) based on a detection result of a sensor configured to detect a motion of the user; and
a moveable mechanism (221) configured to change at least one of the relative position and the relative angle between the product and the camera (211) based on the instruction accepted by the input unit.

2. The remote shopping system (1000) according to Claim 1, wherein the moveable mechanism (221) is included in a robot (221) having an end effector for holding the product.

3. The remote shopping system (1000) according to Claim 1 or 2, wherein the display unit (110) is configured to display the product information attached to the product.

4. The shopping remote shopping system (1000) according to any one of Claims 1 to 3, wherein a related product is recommended to the user, the related product being a product related to a product purchased by the user or a product the user may become interested in purchasing.

5. A remote shopping method comprising the steps of:
acquiring a captured image of a product;
transmitting an output signal for display to a display unit (110) for displaying the captured image to a user;
accepting an instruction for changing at least one of a relative position and a relative angle between the product and a camera (211) based on a detection result of a sensor configured to detect a motion of the user; and
changing at least one of the relative position and the relative angle between the product and the camera (211) based on the accepted instruction.

6. The remote shopping method according to Claim 5, wherein at least one of the relative position and the relative angle of the product with respect to the camera (211) is changed using a robot (221) having an end effector for holding the product.

7. The remote shopping method according to Claim 5 or 6, wherein the display unit (110) is configured to display the product information attached to the product.

8. The remote shopping method according to any one of Claims 5 to 7, wherein a related product is recommended to the user, the related product being a product related to a product purchased by the user or a product the user may become interested in purchasing.

9. A computer to execute a remote shopping method, the remote shopping method comprising the steps of:
acquiring a captured image of a product;
transmitting an output signal for display to a display unit (110) for displaying the captured image to a user;
accepting an instruction for changing at least one of a relative position and a relative angle between the product and a camera (211) based on a detection result of a sensor configured to detect a motion of the user; and
changing at least one of the relative position and the relative angle between the product and the camera (211) based on the accepted instruction.

10. The program according to Claim 9, wherein at least one of the relative position and the relative angle of the product with respect to the camera (211) is changed using a robot (221) having an end effector for holding the product.

11. The program according to Claim 9 or 10, wherein the display unit (110) is configured to display the product information attached to the product.

12. The program according to any one of Claims 9 to 11, wherein a related product is recommended to the user, the related product being a product related to the product purchased by the user or a product the user may become interested in purchasing.
